# EUROPÄISCHE PATENTSCHRIFT

(11) **EP 0 570 685 B1**
(45) Veröffentlichungstag und Bekanntmachung des Hinweises auf die Patenterteilung: **19.06.1996**
(21) Anmeldenummer: 93105080.1
(22) Anmeldetag: 27.03.1993
(51) Int. Cl.: A47J 43/08, F16H 7/10

(54) **Küchenmaschine**
Food processor
Robot de cuisine

(30) Priorität: 14.05.1992 DE 4215882
(43) Veröffentlichungstag der Anmeldung: 24.11.1993
(73) Patentinhaber: Braun Aktiengesellschaft, Frankfurt am Main (DE)
(72) Erfinder: Börger, Georg, W-6374 Steinbach (DE); Hackel, Simone, W-6080 Gross-Gerau (DE); Lorenz, Marga, W-6000 Frankfurt am Main 80 (DE); Kamprath, Karl-Heinz, W-6200 Wiesbaden (DE)

(56) Entgegenhaltungen:
- DE-A- 3 433 004
- DE-A- 3 933 036
- DE-A- 4 106 832
- DE-U- 8 423 479
- US-A- 1 823 314

## Beschreibung

Die Erfindung betrifft eine Küchenmaschine mit einem Elektromotor, über dessen Antriebswelle zwei in einer Achse gelagerte und mit unterschiedlichen Drehzahlen sich drehende Abtriebswellen angetrieben werden, wobei sowohl die Antriebswelle als auch beide Abtriebswellen entsprechende Riemenscheiben aufweisen, die über je einen Riemen in Antriebsverbindung stehen.

Es ist beispielsweise aus der GB-2 213 698 B1 eine Küchenmaschine bekannt, die ausschließlich zum Bearbeiten von Brotteig dient. Bei dieser Brotteigmaschine sind in einer Aufnahmeeinrichtung zwei nebeneinander angeordnete Behälter ausgebildet, in denen ein zum Bearbeiten des Brotteigs dienendes Arbeitswerkzeug drehbar angeordnet ist. Jedes Arbeitswerkzeug ist über eine Abtriebswelle mit je einer Riemenscheibe verbunden, die über je einen Riemen mit einer Riemenscheibe einer von einem Elektromotor angetriebenen Antriebswelle verbunden sind. Mittel, die für eine vorgegebene Riemenspannung sorgen, damit im Betrieb der Brotteigmaschine die Riemen nicht von den zugeordneten Riemenscheiben herunterfallen, sind hier nicht vorgesehen.

Aus der DE-A-34 33 004 ist weiterhin eine Küchenmaschine bekannt, bei der die mit einem Elektromotor verbundene Antriebswelle mit einer Riemenscheibe versehen ist, die über einen Riemen mit einer weiteren Riemenscheibe verbunden ist, welche ihrerseits eine Verbindung zu einem Getriebegehäuse herstellt, aus dem eine Abtriebswelle zum Antreiben eines Arbeitswerkzeuges herausragt. Zur Spannung des Riemens ist ein Riemenspanner vorgesehen, der aus einer mit einer Exzenterbetätigung bestehenden, drehbaren Rolle besteht, die am Außenumfang des Riemens unter Spannung anliegt.

Aus der US-A-1,823,314 ist weiterhin eine Küchenmaschine der eingangs beschriebenen Art bekannt, bei der über zwei auf der Antriebswelle eines Elektromotors befestigte Riemenscheiben angeordnet sind, die über je einen Riemen mit zwei weiteren Riemenscheiben drehfest verbunden sind, welche ihrerseits auf einer gemeinsamen Achse gelagert sind. Die beiden letztgenannten Riemenscheiben weisen unterschiedliche Durchmesser auf, so daß an den mit ihnen verbundenen Abtriebswellen unterschiedliche Drehzahlen auftreten, wodurch auch unterschiedliche Arbeitswerkzeuge zum Bearbeiten von Nahrungsmitteln auf diese aufgesteckt werden können. Eine Riemenspannvorrichtung für die Riemen ist hier nicht vorgesehen.

Aufgabe der Erfindung ist es daher, eine Küchenmaschine für den häuslichen Bedarf zu schaffen, bei der die zum Antrieb zweier Abtreibswellen dienenden Riemen mit einer vorgeschriebenen Riemenvorspannung auf den Riemenscheiben angeordnet sind und bei der der Riemenantrieb besonders preisgünstig herstellbar ist, ohne daß dabei dieser in seiner Funktion nachteilig eingeschränkt wird.

Diese Aufgabe wird erfindungsgemäß dadurch gelöst, daß die Abtriebswellen auf einer gemeinsamen Achse gelagert sind, daß die Riemenspannung zwischen der Antriebswelle und der ersten Abtriebswelle durch eine relative Parallelverschiebung zwischen der Antriebswelle und der gemeinsamen Achse und der anschließenden Fixierung in der die notwendige Riemenspannung abgebenden Lage erfolgt, daß die Riemenspannung zwischen der Antriebswelle und der zweiten Abtriebswelle durch einen die Führung des zweiten Riemens umlenkenden Riemenspanner erfolgt und daß die Länge des zweiten Riemens so bemessen ist, daß nach Einstellung der Riemenspannung des ersten Riemens die Spannung des zweiten Riemens durch eine innerhalb seines Arbeitsbereiches liegende Bewegung und anschließende Fixierung des Riemenspanners erfolgen kann.

Dadurch, daß nach der Erfindung die Riemenspannung der beiden, vorzugsweise als Zahnriemen ausgebildeten Riemen unterschiedlich voneinander eingestellt wird, können die bei der Herstellung der einzelnen Getriebeteile auftretenden Toleranzen bei der Montage der Küchenmaschine vollständig ausgeglichen werden. Mit der Erfindung können also auch die aufgrund der unterschiedlichen Längen der einzelnen Riemen eventuell benötigten unterschiedlichen Riemenspannungen exakt eingehalten werden, so daß das nach der Erfindung hergestellte Riemengetriebe nahezu problemlos arbeitet, nämlich indem kein Riemen mehr von der Riemenscheibe fällt. Ebenso können auch nicht mehr aufgrund zu lockerer Riemenspannung die Riemenscheiben und die Riemen allzu schnell verschleißen. Ein weiterer Vorteil der Erfindung besteht in der einfachen und schnellen Montage- und Justierarbeit, da nicht die Riemenspannung beider Riemen aufeinander abgestimmt sein muß, sondern diese separat eingestellt wird. Auch durch die Einstellung der Riemenspannung erst bei Montage der Getriebeanordnung werden nachträgliche Justiervorgänge vermieden. Ein weiterer Vorteil besteht darin, daß jeder Zahnriemen, abgestimmt auf die Elastizität des Riemengetriebes, die gegenüber dem zweiten Riemengetriebe unterschiedlich groß ist, bei der Festlegung der Riemenspannung problemlos berücksichtigt werden kann.

Sobald also der erste Riemen durch Parallelverschiebung der gemeinsamen Achse gegenüber der Antriebsachse des Elektromotors seine vorgegebene Spannung erreicht hat, wird die Riemenspannung des zweiten Riemens über den Riemenspanner eingestellt. Hierbei ist es durchaus denkbar, daß anstelle eines auf die vorgegebene Riemenspannung von Hand fest einstellbaren Riemenspanners ein auf den Riemen mit einer ständigen Federvorspannung einwirkender Riemenspanner gewählt wird, der dann nicht mehr von Hand auf die vorgegebene Riemenspannung eingestellt werden muß. Hierdurch wird nochmals das Einstellen der Riemenspannung des zweiten Riemens erleichtert und gleichzeitig wird über eine lange Lebensdauer auch bei Verschleiß der Antriebsteile die Riemenspannung stets konstant gehalten. Die Riemenspannung des zweiten Riemens muß nach Einstellung der Riemenspannung des ersten Riemens immer noch so gering sein, daß diese noch von dem Riemenspanner nachjustiert bzw. gestrafft werden kann. Durch die Einstellung der Vorspannkraft der Riemen wird auch der Geräuschentwicklung entgegengewirkt.

Zur Einstellung der Riemenspannung des ersten Riemens ist es vorteilhaft, daß in Bezug auf das Gehäuse der Küchenmaschine die gemeinsame Achse beider Abtriebswellen räumlich fest und die Antriebswelle verschiebbar zugeordnet ist. Der Abstand der Antriebswelle gegenüber der Abtriebswelle wird also so lange vergrößert, bis sich die gewünschte Riemenspannung ergibt. Anschließend wird der Elektromotor auf dem die beiden Wellen tragenden Träger mittels Befestigungsschrauben fixiert, so daß nun der Abstand zwischen den An- und Abtriebswellen fest und somit auch die Riemenspannung unveränderbar ist.

Weist nach einer Weiterbildung der Erfindung die erste Abtriebswelle die höhere Drehzahl gegenüber der zweiten Abtriebswelle auf, so ergeben sich durch die dadurch bedingten geringeren Umfänge von Riemen und Riemenscheibe auch geringere Maßtoleranzen und somit weniger große Korrekturen an der Riemenspannung des ersten Riemens, die dann alleine durch die Parallelverschiebung der Achsen ausgeglichen werden können. Eine Korrektur des Umschlingungswinkels am ersten Riemen gegenüber den zugeordneten Riemenscheiben ist mittels einer Umlenkrolle nicht nötig, da der Durchmesser der zugeordneten Riemenscheiben verhältnismäßig gering ist. Anders verhält sich dies beim zweiten Riemen, da hier aufgrund des verhältnismäßig großen Durchmessers der dem zweiten Riemen zugeordneten Riemenscheibe die Verwendung einer Lenkrolle als besonders vorteilhaft angebracht ist. Die Lenkrolle vermeidet unnötige Schwingungen im Antriebssystem, die sich vorteilhaft auch auf die Laufgeräusche auswirken.

Besonders einfach läßt sich die auf der Antriebswelle befestigte Riemenscheibe dadurch herstellen, daß die beiden auf der Antriebswelle ausgebildeten Riemenscheiben in einer einzigen Riemenscheibe gleichen Durchmessers und entsprechender Dicke vereinigt sind. Damit diese gleichzeitig einem geringen Verschleiß unterliegt, ist diese einzige Riemenscheibe aus Metall hergestellt, während die im Durchmesser größeren Riemenscheiben aus Kunststoff bestehen und somit als Spritzteile besonders leicht herstellbar sind.

Damit die Küchenmaschine besonders kompakt baut und dabei mit möglichst wenig Lagerstellen versehen ist, wird in einer Weiterbildung der Erfindung vorgeschlagen, daß die zweite Abtriebswelle im Gehäuse und die erste Abtriebswelle in der zweiten Abtriebswelle drehbar gelagert ist. Durch diese Anordnung wird erreicht, daß nur eine einzige Lagerstelle im Gehäuse der Küchenmaschine benötigt wird. Hierdurch tritt ein Achsversatz zwischen den aufeinanderlaufenden Abtriebswellen nicht auf. Der Antriebswirkungsgrad der Küchenmaschine sowie die Geräuschentwicklung wird insbesondere dadurch vermieden, daß der Riemenspanner aus einer Laufrolle besteht, deren Drehachse durch eine Exzentervorrichtung zum Riemen hin oder weg verschoben und nach Erreichen der gewünschten Riemenspannung fixiert werden kann.

Um Arbeitswerkzeuge, die erst durch Anpassung der Drehzahl optimale Arbeitsergebnisse liefern, mit unterschiedlicher Drehzahl laufen lassen zu können, wird in einer Weiterbildung der Erfindung vorgeschlagen, daß die erste und zweite Abtriebswelle mit je einer Kupplungseinrichtung versehen sind, die mit Gegenkupplungen zum Antrieb von unterschiedlichen Drehzahlen aufweisenden Arbeitswerkzeugen kuppelbar sind.

In einer Weiterbildung der Erfindung ist vorgesehen, daß zwischen der Antriebswelle und den Abtriebswellen mindestens ein gehäusefester Anschlag ausgebildet ist, der in geringem Abstand zu der Außenseite des ersten Riemens verläuft. Hierdurch können die radialen Flatterbewegungen des ersten Riemens in Grenzen gehalten werden. Da der erste Riemen zwar gespannt, aber nicht mit Hilfe einer Spannrolle, wie dies beim zweiten Riemen der Fall ist, ständig unter Vorspannung gehalten wird, können deshalb Flatterbewegungen am ersten Riemen auftreten. Vorteilhaft ist es dabei, daß der Anschlag an dem Lagerzapfen des Riemenspanners ausgebildet ist, der mit seinem freien Ende aus dem Riemenspanner herausragt. Hierdurch dient der Lagerzapfen zusätzlich noch als Anschlag für den ersten Riemen. Dadurch, daß sich der Lagerzapfen mit der Spannrolle dreht, wird beim Anschlagen des ersten Riemens am Anschlag die Reibung sehr gering gehalten, so daß der erste Riemen nicht frühzeitig verschleißt.

Ein Ausführungsbeispiel der Erfindung ist in der Zeichnung dagestellt und wird im folgenden näher erläutert. Es zeigen:
- Fig. 1: Draufsicht von unten her in die im Sockel einer Küchenmaschine ausgebildete Getriebeanordnung und
- Fig. 2: Längsschnitt gemäß der Schnittführung II-II nach Fig. 1 durch die Küchenmaschine im Bereich der Getriebeanordnung.

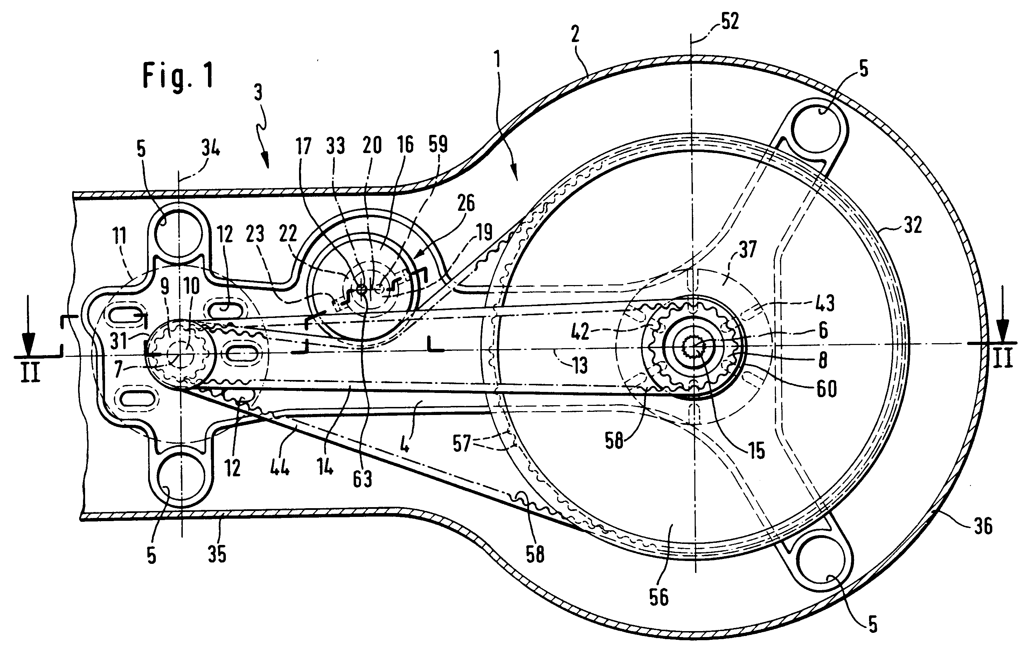

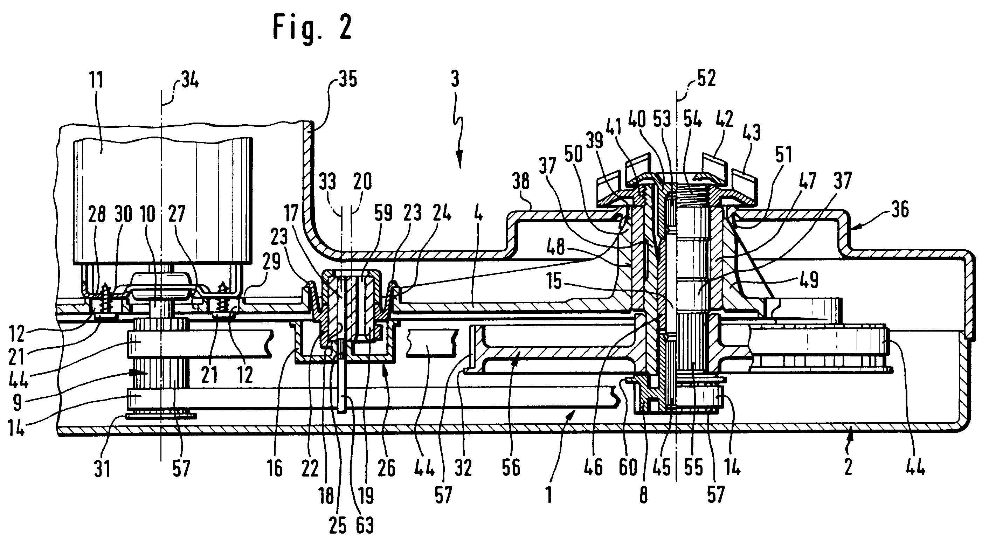

Wie aus den Figuren 1 und 2 hervorgeht, ist im Bodenbereich im Gehäuse 2 einer Vielzweckküchenmaschine 3 eine Antriebseinrichtung 1 ausgebildet, die als Antrieb für ein in einem Behälter angeordnetes Arbeitswerkzeug dient, das zum Bearbeiten von Nahrungsmitteln geeignet ist. Das Gehäuse 2 der Vielzweckküchenmaschine 3 besteht nach Fig. 1 im wesentlichen aus einem entlang der Mittelachse 34 sich nach oben erstreckenden Motorgehäuse 35 und einem sich quer zur Mittelachse 34 erstreckenden Gerätesockel 36, in dem parallel zur Mittelachse 34 die erste und zweite Abtriebswelle 15 und 37 verläuft.

Die erste und zweite Abtriebswelle 15, 37 durchdringen nach Fig. 2 die Oberseite 38 des Gerätesockels 36 über eine Bohrung 39 und sind an ihren freien Enden 40, 41 mit konzentrisch zur Mittelachse 52 verlaufenden und gleichmäßig am Umfang verteilten Verzahnungen 42, 43 ausgebildet, die jeweils als erste und zweite Kupplungshälfte dienen. Entsprechende erste und zweite Kupplungshälften sind am Boden eines in der Zeichnung nicht dargestellten Behälters ausgebildet, die mit den ersten und zweiten Kupplungshälften 42, 43 der ersten und zweiten Abtriebswelle 15, 37 kuppelbar sind, wenn der Behälter auf den Gerätesockel 36 aufgesetzt wird. Die am Behälter ausgebildete erste und zweite Kupplungseinrichtung wird wiederum über eine Lageranordnung im Boden des Behälters drehbar gelagert und ist mit einer im Inneren des Behälters ausgebildeten, weiteren dritten und vierten Kupplungseinrichtung versehen, auf denen entsprechend der gewünschten Drehzahl verschiedenartige Arbeitswerkzeuge kuppelbar sind (nicht dargestellt).

Die Antriebseinrichtung 1 ist nach Fig. 1 auf einem im wesentlichen in Draufsicht doppel-T-förmig ausgebildeten Träger 4 gelagert, der an seinen T-förmigen Enden Aufnahmebohrungen 5 aufweist, die zur Aufnahme von in der Zeichnung nicht dargestellten Stellfüßen der Vielzweckküchenmaschine 3 dienen können. Zu beiden Seiten des Trägers 4 sind in Fig. 1 Mittelpunkte 6, 7 dargestellt, von denen der Mittelpunkt 6 den Mittelpunkt der ersten und zweiten Abtriebswelle 15, 37 und der Mittelpunkt 7 den Mittelpunkt der Antriebswelle 10 des Elektromotors 11 darstellt.

Auf der Antriebswelle 10 ist nach Fig. 1 eine Zahnriemenscheibe 9 befestigt, die zum Antrieb zweier mit ihr in Eingriff stehenden ersten und zweiten Zahnriemen 14 und 44 dient. Der Elektromotor 11 ist über am Träger 4 ausgebildete, in Längsrichtung zur Mittelachse 13 verlaufende Langlöcher 12 mittels in der Zeichnung nicht dargestellter Schrauben am Träger 4 befestigt. Die Langlöcher 12 haben weiterhin die Aufgabe, den Elektromotor 11 vor Montage so weit gemäß Fig. 1 auf der Mittellinie 13 weg von der Mittelachse 34, also nach links, zu verschieben, bis der umfangsseitig auf den beiden Zahnriemenscheiben 9, 8 umlaufende erste Zahnriemen 14 eine vorgegebene Spannung erreicht hat.

Die Zahnriemenscheibe 8 ist gemäß Fig. 2 auf der ersten Abtriebswelle 15 über eine Verzahnung 45 drehfest verbunden. Die erste Abtriebswelle 15 lagert in einer ersten Lagerbuchse 46, die sich wiederum in der zweiten Abtriebswelle 37 abstützt, die hier als Hohlwelle ausgebildet ist. Die zweite Abtriebswelle 37 wird letztendlich in einer weiteren Lagerbuchse 47 gelagert, die sich dann in einer am Träger 4 ausgebildeten Bohrung 48 abstützt, die in einem Lagerauge 49 am Träger 4 ausgebildet ist. Das freie Ende 50 des Lagerauges 49 liegt dichtend an einer an der Bohrung 39 des Gerätesockels 36 angeformten Dichtlippe 51 an.

Wie aus Fig. 2 deutlich ersichtlich ist, ist der Lagerabschnitt links von der Mittelachse 52 gänzlich geschnitten, während der rechts von der Mittelachse 52 angeordnete Abschnitt der zweiten Abtriebswelle 37 nicht geschnitten ist, so daß die Lagerbuchse 46 und die erste Abtriebswelle 15 verdeckt sind, also nicht zu erkennen sind.

Nach Fig. 2 bildet das freie Ende 40 ein eigenes Bauteil und ist über eine Längsverzahnung 53 mit der ersten Abtriebswelle 15 fest verbunden. Auch das freie Ende 41 ist mit der zweiten Abtriebswelle 37 über eine Gewindeanordnung 54 drehfest verbunden. Wie aus Fig. 2 ersichtlich, besteht die Lageranordnung der ersten und zweiten Abtriebswelle 15, 37 aus einer Gleitlageranordnung mit den beiden Lagerbuchsen 46, 47. Anstelle der Gleitlageranordnung kann selbstverständlich auch eine Kugel- oder Rollenlageranordnung gewählt werden.

Wie aus Fig. 2 weiter hervorgeht, weist auch die zweite Abtriebswelle 37 an ihrem unteren Ende eine Längsverzahnung 55 auf, auf der eine weitere Zahnriemenscheibe 56 aufgeschrumpft ist. Die Zahnriemenscheibe 56 weist einen erheblich größeren Durchmesser auf als die Zahnriemenscheibe 8 und 9. Am Umfang der Zahnriemenscheiben 9, 8 und 56 sind parallel zur Mittelachse 52 verlaufende Zähne 57 ausgebildet, die mit an den Zahnriemen 14, 44 ausgebildeten Vertiefungen 58 in Eingriff stehen (Fig. 1). Wie aus Fig. 1 ersichtlich ist, sind an der im Durchmesser größeren Zahnriemenscheibe 56 einzelne Zähne 57 weggelassen, so daß mit dem zweiten Zahnriemen 44 weniger Zähne 57 in Eingriff stehen, was zur Geräuschminderung und Temperaturreduzierung führt.

Nach Fig. 1 ist oberhalb der Mittellinie 13 zwischen den Mittelpunkten 6, 7 eine Spannrolle 16 drehbar gelagert, die mit einem an ihm angeordneten Lagerzapfen 17 in eine Bohrung 18 einer Exzenterrolle 19 drehbar zentriert eingreift. Die von der Exzenterrolle 19 gebildete Mittelachse 20 liegt außerhalb der von dem Lagerzapfen 17 gebildeten Längsachse 33 der Bohrung 18, wobei letztere auch den Mittelpunkt der Spannrolle 16 darstellt. Durch Verdrehen der Spannrolle 16 um die Mittelachse 20, was durch Eingreifen eines Schlüsssels in eine in der Exzenterrolle 19 neben der Bohrung 18 ausgebildeten weiteren Bohrung 59 erfolgt, wird also die Lagerachse 33 der Spannrolle 16 derart exzentrisch verändert, daß die Spannrolle 16 zum Zahnriemen 14 hin oder weg von ihm bewegt wird. Hierdurch kann, nachdem der erste Zahnriemen 14 durch Verschieben des Elektromotors 11 in den Langlöchern 12 und anschließendes Befestigen des Elektromotors 11 auf dem Träger 4 gespannt wurde, nun der zweite Zahnriemen 44 durch Verschieben der Spannrolle 16 zum zweiten Zahnriemen 44 hin je nach gewünschter Vorspannung gespannt werden. Wie aus Fig. 2 ersichtlich wird, ist der Elektromotor 11 über Schrauben 21 am Träger 4 befestigt. Die Teile 16, 17, 19, 22, 23 bilden den Riemenspanner 26 für den zweiten Zahnriemen 44.

Weiterhin ist aus Fig. 2 zu erkennen, daß die Exzenterrolle 19 in einer Hülse 22 reibschlüssig gelagert ist, wobei die Hülse 22 über an ihr angeformte Federklammern 23 in einer am Träger 4 ausgebildeten Bohrung 24 federnd einrastet. Die Hülse 22 hält die Exzenterrolle 16 unter Kraft- oder Reibschluß, so daß bei Anwendung von Reibschluß nach Uberwindung der Reibung die Exzenterrolle 19 in der Hülse 22 drehbar ist. Hierdurch wird eine stufenlose Verstellung der Exzenterrolle 19 erreicht. Bei Kraftschlußeinwirkung wird die Exzenterrolle 19 ratschenförmig verstellt. Weiterhin ist die Spannrolle 16 über eine Längsverzahnung 25 mit dem Lagerzapfen 17 fest verbunden. Der Lagerzapfen 17 ragt nach Fig. 2 nach unten aus der Spannrolle 16 so weit heraus, daß er seitlich an der Außenfläche des ersten Riemens 14 angeordnet ist, so daß er als Anschlag 63 für den ersten Riemen 14 dient, wenn dieser bei hohen Drehzahlen zu flattern beginnt, das heißt, die Schwingungsbewegungen des ersten Riemens in radialer Richtung werden hierdurch begrenzt, was ebenfalls eine Geräuschminderung mit sich bringt.

Während die Zahnriemenscheibe 9 aus Metall hergestellt ist, sind die Zahnriemenscheiben 8 und 56 aus Kunststoff gespritzt. Gleiches gilt auch für die Spannrolle 16.

Die Montage und Wirkungsweise der erfindungsgemäßen Küchenmaschine ist folgende.

Nachdem nach Fig. 2 die Lagerbuchse 47 in das Lagerauge 49 des Trägers 4 eingepreßt wurde, werden die bereits ineinandergesteckten Teile 37, 46, 15 gemäß Fig. 2 von unten her in die Lagerbuchse 47 eingesetzt. Zur axialen Sicherung werden die erste und zweite Abtriebswelle 15, 37 von oben her mittels der freien Enden 40, 41 fest verbunden. Dabei wird das freie Ende 40 über die Längsverzahnung 53 auf die erste Abtriebswelle 15 aufgeschrumpft und anschließend das freie Ende 41 der zweiten Abtriebswelle 37 mittels der Gewindeanordnung 54 auf die zweite Abtriebswelle 37 fest aufgeschraubt. Zuvor wurde bereits die Zahnriemenscheibe 8 auf die Längsverzahnung 45 der ersten Abtriebswelle 15 aufgeschrumpft. Ebenso wurde die Lagerbuchse 46 auf die erste Abtriebswelle 15 gepreßt. Auch die Zahnriemenscheibe 56 war bereits vor Montage über die Längsverzahnung 55 auf die zweite Abtriebswelle 37 aufgepreßt. Auch der bereits vormontierte Riemenspanner 26 wird mittels seiner Federklammern 23 in der Bohrung 24 des Trägers 4 gemäß Fig. 2 befestigt.

Nun wird der Elektromotor 11 von oben her mit seiner auf der Antriebswelle 10 aufgeschrumpften Zahnriemenscheibe 9 durch die im Träger ausgebildete Bohrung 27 durchgesteckt, bis der Flansch 28 an der Stirnfläche 29 des Trägers 4 anliegt. Gemäß Fig. 2 werden nun von unten her die Schrauben 21 durch die Langlöcher 12 durchgesteckt und mit den im Flansch 28 ausgebildeten Gewindebohrungen 30 verbunden. Allerdings nur so fest, daß der Elektromotor 11 in dem Bereich verschiebbar ist, der sich durch das Spiel der Langlöcher 12 und der Schrauben 21 ergibt.

Nun wird zunächst der zweite Zahnriemen 44 auf die Zahnriemenscheibe 9 und die Zahnriemenscheibe 56 aufgezogen. Anschließend wird der erste Zahnriemen 14 ebenfalls auf die Zahnriemenscheibe 9 und die Zahnriemenscheibe 8 aufgelegt. Bei der Auswahl der beiden Zahnriemen 14 und 44 muß darauf geachtet werden, daß, nachdem der erste Zahnriemen 14 gespannt ist, der zweite Zahnriemen 44 noch locker auf den Riemenscheiben 9 und 56 aufliegt, so daß er erst durch den Riemenspanner 26 seine ordnungsgemäße Spannung nachträglich erhält. Nun wird der Elektromotor 11 gemäß Fig. 2 so weit nach links verschoben, bis der erste Zahnriemen 14 die gewünschte Vorspannung einnimmt. Alsdann werden die Schrauben 21 angezogen, so daß der Elektromotor 11 ortsfest mit dem Träger 4 verbunden ist.

Im nächsten Montagegang wird nun die Spannrolle 16 über die Exzenterrolle 19 um die Mittelachse 20 so weit verdreht, bis die Exzenterrolle 16 mit der gewünschten Vorspannung an dem zweiten Zahnriemen 44 anliegt. Da die Exzenterrolle 19 reibschlüssig in der Hülse 22 bzw. mittels einer in der Zeichnung nicht näher dargestellten Rasteinrichtung mit der Hülse 22 drehfest verbunden ist, verdreht sich die Exzenterrolle 19 nach ihrer Einstellung im Betrieb der Küchenmaschine nicht mehr, so daß die vorgegebene Vorspannung des Zahnriemens 44 dauerhaft anhält.

Beide Spannungen der Zahnriemen 14, 44 sind nun genau auf ihre vorgegebenen Riemenlängen eingestellt, so daß eine optimale Kraftübertragung erreicht wird, ohne daß einer der Zahnriemen 14, 44 von den Zahnriemenscheiben 8, 9 oder 56 abgleitet, was aber auch noch durch die Ringwülste 31, 32, 60 an den Zahnriemenscheiben 9, 56, 8 verhindert wird. Durch die individuelle Einstellung der Riemenspannung beider Zahnriemen 14, 44 wird eine Antriebseinrichtung 1 für eine Vielzweckküchenmaschine 3 geschaffen, die ohne Störungen geräuscharm und mit geringer Temperaturentwicklung arbeitet.

Sobald der Elektromotor 11 eingeschlatet wird, werden die beiden Zahnriemen 14, 44 über die sich drehende Zahnriemenscheibe 9 angetrieben. Gleichzeitig drehen sich die Zahnriemenscheiben 8 und 56 mit unterschiedlichen Drehzahlen, so daß sich auch die mit den Verzahnungen 42, 43 ausgebildeten Kupplungshälften mit unterschiedlichen Drehzahlen drehen. Je nachdem, welche Verzahnung 42 oder 43 in Anspruch genommen wird, dreht sich das angetriebene Arbeitswerkzeug (nicht dargestellt) langsam oder schneller. Die mit den Verzahnungen 43 versehene Kupplungshälfte weist die niedere Drehzahl und somit das wesentlich höhere Drehmoment auf, das beispielsweise zum Antrieb eines Knethakens dient, der auch sehr zähe und feste Teige bearbeiten kann. Die mit den Verzahnungen 42 versehene Kupplungseinrichtung weist eine verhältnismäßig hohe Drehzahl auf und daher gibt sie bei gleicher Motordrehzahl ein geringeres Drehmoment ab. Diese Kupplungseinrichtung 42 dient zum Antrieb von schnell laufenden Messern als Arbeitswerkzeug oder Reibscheiben, Schneebesen etc..

## Patentansprüche

1. Küchenmaschine mit einem Elektromotor (11), über dessen Antriebswelle (10) zwei in einer Achse (52) gelagerte und mit unterschiedlichen Drehzahlen sich drehende Abtriebswellen (15, 37) angetrieben werden, wobei sowohl die Antriebswelle (10) als auch beide Abtriebswellen (15, 37) entsprechende Riemenscheiben (8, 56) aufweisen, die über je einen Riemen (14, 44) in Antriebsverbindung stehen, wobei die Abtriebswellen (15, 37) auf einer gemeinsamen Achse (52) gelagert sind,
**dadurch gekennzeichnet**,
daß die Riemenspannung zwischen der Antriebswelle (10) und der ersten Abtriebswelle (15) durch eine relative Parallelverschiebung zwischen der Antriebswelle (10) und der gemeinsamen Achse (52) und der anschließenden Fixierung in der die notwendige Riemenspannung abgebenden Lage erfolgt, daß die Riemenspannung zwischen der Antriebswelle (10) und der zweiten Abtriebswelle (37) durch einen die Führung des zweiten Riemens umlenkenden Riemenspanner (26) erfolgt und daß die Länge des zweiten Riemens (44) so bemessen ist, daß nach Einstellung der Riemenspannung des ersten Riemens (14) die Spannung des zweiten Riemens (44) durch eine innerhalb seines Arbeitsbereiches liegende Bewegung und anschließende Fixierung des Riemenspanners (26) erfolgen kann.

2. Küchenmaschine nach Anspruch 1,
**dadurch gekennzeichnet**,
daß in Bezug auf das Gehäuse (2) der Küchenmaschine (3) die gemeinsame Achse (52) beider Abtriebswellen räumlich fest und die Antriebswelle (10) verschiebbar zugeordnet ist.

3. Küchenmaschine nach Anspruch 1 oder 2,
**dadurch gekennzeichnet,**
daß die erste Abtriebswelle (15) die höhere Drehzahl aufweist.

4. Küchenmaschine nach Anspruch 3,
**dadurch gekennzeichnet,**
daß die Riemenscheibe (8) der ersten Abtriebswelle (15) etwa den gleichen Durchmesser wie die zugehörige Riemenscheibe (9) der Antriebswelle (10) aufweist und daß der Durchmesser der Riemenscheibe (56) der zweiten Abtriebswelle (37) wesentlich größer ist als der Durchmesser der entsprechenden Riemenscheibe (9) auf der Antriebswelle (10).

5. Küchenmaschine nach Anspruch 4,
**dadurch gekennzeichnet,**
daß die beiden auf der Antriebswelle (10) ausgebildeten Riemenscheiben (9) in einer einzigen Riemenscheibe gleichen Durchmessers und entsprechender Dicke vereinigt sind.

6. Küchenmaschine nach Anspruch 5,
**dadurch gekennzeichnet,**
daß die einzige Riemenscheibe (9) aus Metall und die mit den Abtriebswellen (15, 37) verbundenen Riemenscheiben (8, 56) aus Kunststoff bestehen.

7. Küchenmaschine nach Anspruch 1,
**dadurch gekennzeichnet,**
daß die zweite Abtriebswelle (37) im Träger (4) und die erste Abtriebswelle (15) in der zweiten Abtriebswelle (37) drehbar gelagert ist.

8. Küchenmaschine nach Anspruch 1,
**dadurch gekennzeichnet,**
daß der Riemenspanner (26) aus einer Spannrolle (16) besteht, deren Drehachse (33) durch eine Exzentervorrichtung (19) zum zweiten Riemen (44) hin verschoben und nach Erreichen jeder gewünschten Riemenspannung fixiert werden kann.

9. Küchenmaschine nach Anspruch 1,
**dadurch gekennzeichnet,**
daß die erste (15) und zweite (37) Abtriebswelle mit je einer Kupplungseinrichtung (42, 43) versehen sind, die mit Gegenkupplungen zum Antrieb von unterschiedlichen Drehzahlen aufweisenden Arbeitswerkzeugen kuppelbar sind.

10. Küchenmaschine nach Anspruch 1,
**dadurch gekennzeichnet,**
daß zwischen der Antriebswelle (10) und den Abtriebswellen (15, 37) mindestens ein gehäusefester Anschlag (63) ausgebildet ist, der in geringem Abstand zu der Außenseite des ersten Riemens (14) verläuft.

11. Küchenmaschine nach Anspruch 10,
**dadurch gekennzeichnet**
daß der Anschlag (63) an dem Lagerzapfen (17) des Riemenspanners (26) ausgebildet ist, der mit seinem freien Ende aus dem Riemenspanner (26) herausragt.

## Claims

1. A kitchen appliance with an electric motor (11), in which a motor drive shaft (10) drives two driven shafts (15, 37) arranged on an axis (52) and rotating at different speeds, with both the drive shaft (10) and the two driven shafts (15, 37) including corresponding pulleys (8, 56) establishing a driving connection through a respective belt (14, 44) each, with the driven shafts (15, 37) being arranged on a common axis (52),
**characterized in that** the belt tension between the drive shaft (10) and the first driven shaft (15) is adjusted by a parallel displacement of the drive shaft (10) relative to the common axis (52) and its subsequent positioning in its proper location ensuring the necessary belt tension, that the belt tension between the drive shaft (10) and the second driven shaft (37) is adjusted by a belt adjuster (26) deflecting the guide of the second belt, and that the length of the second belt (44) is dimensioned such that on adjustment of the tension of the first belt (14), tension adjustment of the second belt (44) can be effected by a movement within its operating range and by fixedly securing the belt adjuster (26) subsequently.

2. The kitchen appliance as claimed in claim 1,
**characterized in that** that the common axis (52) of both driven shafts is in a fixed position, and the drive shaft (10) is displaceable, relative to the housing (2) of the kitchen appliance (3).

3. The kitchen appliance as claimed in claim 1 or claim 2,
**characterized in that** the first driven shaft (15) rotates at a higher speed.

4. The kitchen appliance as claimed in claim 3,
**characterized in that** the diameter of the pulley (8) of the first driven shaft (15) is approximately equal to the diameter of the pulley (9) associated with the drive shaft (10), and that the diameter of the pulley (56) of the second driven shaft (37) is substantially greater than the diameter of the corresponding pulley (9) on the drive shaft (10).

5. The kitchen appliance as claimed in claim 4,
**characterized in that** the two pulleys (9) mounted on the drive shaft (10) are combined into a single pulley of equal diameter and corresponding thickness.

6. The kitchen appliance as claimed in claim 5,
**characterized in that** the single pulley (9) is made of metal, and the pulleys (8, 56) connected with the driven shafts (15, 37) are made of plastic material.

7. The kitchen appliance as claimed in claim 1,
**characterized in that** the second driven shaft (37) rotatably mounted in the supporting structure (4), and the first driven shaft (15) is rotatably mounted within the second driven shaft (37).

8. The kitchen appliance as claimed in claim 1,
**characterized in that** the belt adjuster (26) is comprised of an idler pulley (16) whose axis of rotation (33) is adapted to be shifted in the direction of the second belt (44) by means of an eccentric device (19), and is adapted to be fixed in place upon reaching any desired belt tension.

9. The kitchen appliance as claimed in claim 1,
**characterized in that** the first (15) and the second (37) driven shafts are provided with a respective coupling device (42, 43) adapted to be connected with mating couplings for the driving of processing tools rotating at different speeds.

10. The kitchen appliance as claimed in claim 1,
**characterized in that** between the drive shaft (10) and the driven shafts (15, 37) there is provided at least one stop (63) fixed to the housing and extending at a small relative distance to the outside of the first belt (14).

11. The kitchen appliance as claimed in claim 10,
**characterized in that** the stop (63) is formed on the bearing journal (17) of the belt adjuster (26) protruding with its free end from the belt adjuster (26).

## Revendications

1. Robot de cuisine comportant un moteur électrique (1), via l'arbre d'entraînement (10) duquel sont entraînés deux arbres menés (15, 37) montés dans un axe (52) et en rotation à différentes vitesses de rotation, dans lequel tant l'arbre d'entraînement (10) que les deux arbres menés (15, 37) présentent des poulies correspondantes (8, 56) qui se trouvent en liaison d'entraînement via une courroie respective (14, 44), les arbres menés (15, 37) étant montés sur un axe commun (52), caractérisé en ce que la tension de courroie entre l'arbre d'entraînement (10) et le premier arbre mené (15) s'effectue par un déplacement parallèle relatif entre l'arbre d'entraînement (10) et l'axe commun (52) et par la fixation qui suit dans la position déterminant la tension de courroie nécessaire, en ce que la tension de courroie entre l'arbre d'entraînement (10) et le second arbre mené (37) s'effectue par un tendeur de courroie (26) renvoyant le guidage de la seconde courroie, et en ce que la longueur de la seconde courroie (44) est dimensionnée de telle sorte qu'après le réglage de la tension de la première courroie (14), la tension de la seconde courroie (44) peut s'effectuer par un mouvement qui se fait à l'intérieur de sa plage de travail et par fixation successive du tendeur de courroie (26).

2. Robot de cuisine selon la revendication 1, caractérisé en ce que l'axe commun (52) des deux arbres menés est fixe par rapport au boîtier (2) du robot de cuisine (3), et en ce que l'arbre d'entraînement (10) est agencé en déplacement.

3. Robot de cuisine selon l'une ou l'autre des revendications 1 et 2, caractérisé en ce que le premier arbre mené (15) présente la vitesse de rotation la plus élevée.

4. Robot de cuisine selon la revendication 3, caractérisé en ce que la poulie (8) du premier arbre mené (15) présente approximativement le même diamètre que la poulie associée (9) de l'arbre d'entraînement (10), et en ce que le diamètre de la poulie (56) du second arbre mené (37) est nettement supérieur au diamètre de la poulie correspondante (9) sur l'arbre d'entraînement (10).

5. Robot de cuisine selon la revendication 4, caractérisé en ce que les deux poulies (9) réalisées sur l'arbre d'entraînement (10) sont réunies en une seule poulie d'un diamètre égal et d'une épaisseur correspondante.

6. Robot de cuisine selon la revendication 5, caractérisé en ce que la poulie unique (9) est constituée en métal, et en ce que les poulies (8, 56) reliées aux arbres menés (15, 37) sont constituées en matière plastique.

7. Robot de cuisine selon la revendication 1, caractérisé en ce que le second arbre mené (37) est monté en rotation dans le support (4), et en ce que le premier arbre mené (15) est monté en rotation dans le second arbre mené (37).

8. Robot de cuisine selon la revendication 1, caractérisé en ce que le tendeur de courroie (26) est constitué par un galet tendeur (16), dont l'axe de rotation (33) peut être déplacé par un dispositif excentrique (19) vers la seconde courroie (44), et être fixé après avoir atteint chaque tension de courroie désirée.

9. Robot de cuisine selon la revendication 1, caractérisé en ce que le premier arbre mené (15) et le second arbre mené (37) sont pourvus chacun d'un dispositif d'accouplement (42, 43) qui peuvent être accouplés à des accouplements complémentaires pour l'entraînement d'outils de travail présentant différentes vitesses de rotation.

10. Robot de cuisine selon la revendication 1, caractérisé en ce qu'il est formé entre l'arbre d'entraînement (10) et les arbres menés (15, 37) au moins une butée (63) solidaire du boîtier, qui s'étend à faible distance de la face extérieure de la première courroie (14).

11. Robot de cuisine selon la revendication 10, caractérisé en ce que la butée (63) est réalisée sur le tenon de montage (17) du tendeur de courroie (26), qui dépasse par son extrémité libre hors du tendeur de courroie (26).
